# EUROPEAN PATENT APPLICATION

(11) **EP 3 310 116 A1**
(43) Date of publication of application: **18.04.2018**
(21) Application number: 16193561.4
(22) Date of filing: 12.10.2016
(51) Int. Cl.: H04W 76/02, H04W 76/04, H04W 68/06, H04W 68/08

(54) **DOWNLINK DATA NOTIFICATION**

(71) Applicant: NTT DOCOMO, INC., Chiyoda-ku Tokyo (JP)
(72) Inventor: GUERZONI, Riccardo, 80687 Munich (DE); SAMA, Malla Reddy, 80687 Munich (DE); MUTIKAINEN, Jari, 80687 Munich (DE); KIESS, Wolfgang, 80687 Munich (DE)
(74) Representative: Betten & Resch

(57) **Abstract**

A mobile communications network is presented, wherein the mobile communications network includes a user equipment UE, an access node of an access network, and a control plane function, wherein a method in the mobile communications network comprises the following steps: moving the UE from a connected state into a connected inactive state in the access network while maintaining an active control plane connection associated with the UE between the access node and the control plane function; generating at the access node a UE context; receiving at the access node from a core network downlink data destined to the UE; if failing to resume an access network connection between the access node and the UE, generating by the access node a downlink data notification based on the UE context; sending the downlink data notification through the active control plane connection.

## Description

### Field of the invention

The present invention is in the field of mobile data communication. Specifically, the invention is concerned with a method and apparatus in an access network for generating downlink data notification to core network elements.

### Background of the invention

### Network triggered Service Request in EPC

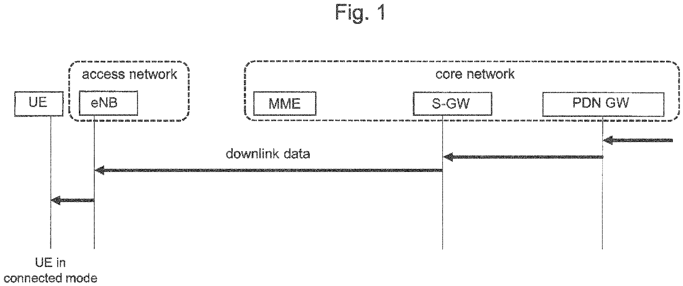

In the Evolved Packet Core (EPC) and the current Evolved Universal Terrestrial Radio Access Network (E-UTRAN) specifications (3GPP TS 23.401 V13.6.1) an eNodeB (eNB) receives downlink data from the core network user plane, i.e. from a Serving Gateway (S-GW), only when the UE is in connected mode. This forwarding of downlink data from elements of the core network to the access network and to the UE is illustrated in Figure 1. In this case the S-GW is the mobility anchor for the UE.

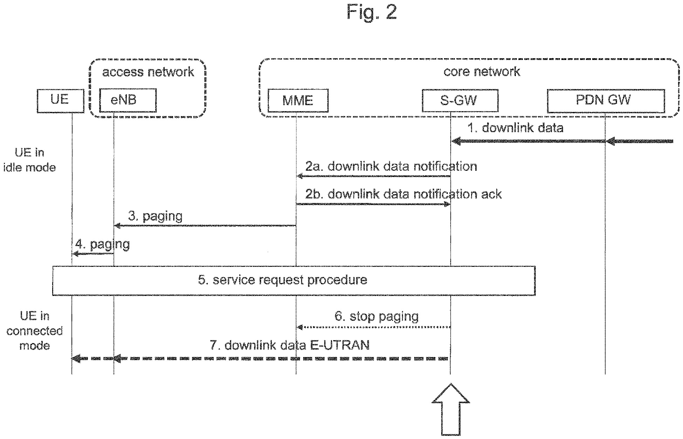

A scenario, where the UE is at first in idle mode is illustrated in Figure 2. When receiving downlink data for a UE in idle mode (step 1), the S-GW detects that there is no DL U-plane bearer associated with the UE, buffers the packet, identifies the MME associated with the UE and sends a downlink data notification message to the MME (step 2a), which the MME may acknowledge (step 2b). As a consequence the MME starts a paging procedure (step 3) to all the eNBs associated with the last known Tracking Areas list where the UE was located. The UE receives the paging (step 4). To simplify the illustration, only the eNB that successfully pages the UE, which is the so called home-eNB, is shown in Figure 2. After receiving the paging, the UE establishes a Radio resource Control (RRC) connection to start a service request procedure (step 5). Only after establishing the connection between the eNB and the UE and the user plane connection between the eNB and the S-GW, so that the UE is transitioned from idle to connected mode, the S-GW forwards the data to the eNB (step 7). After successful service request procedure, the S-GW may optionally send a stop paging signal to the MME (step 6). The large arrow at the bottom of Figure 2 indicates the stage at which downlink data is buffered, which is the S-GW.

Thus, in a current mobile network configuration (EPC and E-UTRAN), an eNB does, by design of the protocols, not receive downlink data for a UE that is not in connected mode.

### Network triggered Service Request in LIPA

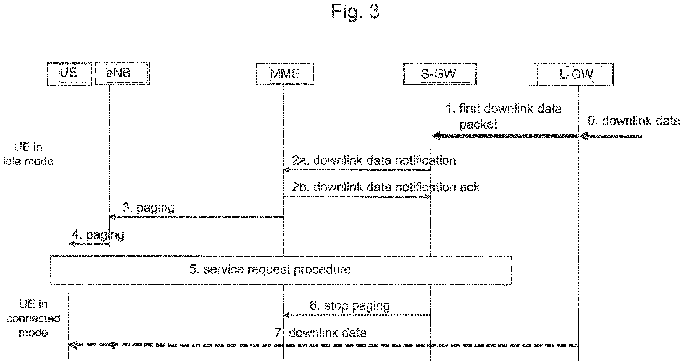

Figure 3 illustrates a scenario of downlink data flow of a UE which is at first in idle mode for a network triggered service request according to LIPA. In current Local IP access (LIPA) specifications (3GPP TS 23.859 V12.0.1), when a local gateway (L-GW) receives downlink data for a UE in idle mode (step 0), the L-GW sends the first data packet to the S-GW (step 1) and buffers all other data packets. The S-GW triggers the MME to page the UE (step 2a), which the MME may acknowledge (step 2b). Steps 3 and 4 of the paging procedure are similar to the scenario of Figure 2, which is described above. When the UE answers to the paging, it starts a LIPA specific service request procedure (step 5). Finally the L-GW forwards the downlink data to the related home eNB (step 7) only when the UE is in connected mode. After successful service request procedure, the S-GW may optionally send a stop paging signal to the MME (step 6).

This approach is conceptually similar to the scenario of Network triggered Service Request outlined in Figure 2 and described above. Hence, also in this case the eNB does not receive data for a UE that is not in connected mode.

### User plane EPS optimization in 3GPP TS 24.301 and 3GPP TSG-RAN WG2

In 3GPP TS 24.301 (Non-Access-Stratum (NAS) protocol for Evolved Packet System) the access network (AN), more specifically an eNB, may request a UE to move to EMM-IDLE mode with suspend indication. In this state the Non Access Stratum (NAS) signaling connection with core network, specifically the MME, is not released. However, only the UE can resume the RRC connection by sending control plane signaling or uplink data. This means that, when a UE is in EMM-IDLE mode, it cannot receive downlink data destined to it.

The discussion in the 3GPP TSG-RAN WG2 in relation to the EMM-IDLE mode with suspend indication is captured in TS 36.331 V13.1.0. Also in this case only the UE can trigger a re-establishment of the RRC connection. The case where the eNB receives downlink data for a UE in EMM-IDLE mode with suspend indication is not considered.

### 3GPP NextGen TR 23.799

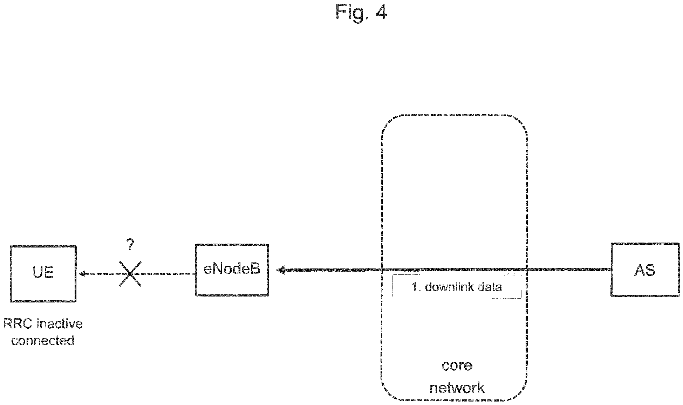

Section 6.3.2 of 3GPP TR 23.799 V0.5.0 (Study on Architecture for Next Generation System) proposes an RRC inactive connected state where the UE is in connected mode from the CN point of view but it has no active RRC connection in the RAN. Such a scenario is illustrated in Figure 4. No signalling to the CN is needed to perform the transition from RRC connected state to RRC inactive connected state. In case of reception of downlink data for the UE, the RAN resumes the UE and transitions the UE from the RRC inactive connected state to RRC connected state. Section 6.3.2 of 3GPP TR 23.799 V0.5.0 recites: *"the RRC inactive connected to RRC connected state transition inspired by the Suspend and Resume procedures defined for LTE in Rel-13".* 3GPP TR 23.799 V0.5.0 does not describe how the eNB reacts to a failure in resuming the RRC connection.

### Other approaches

WO 2014/021770 describes a method and apparatus for reducing signaling in a core network" presents a method and apparatus for reducing signaling in a core network involved in changes of states of a wireless terminal. Thereby, a reduced context is allocated based on parameters received by a base station. The reduced context is used by the base station for reconfiguring a RRC connection between the wireless terminal and the base station by means of the reduced context, such that the signaling is hidden from a Serving Gateway, S-GW. Specifically, upon inactivity of the wireless terminal, a UE context release request message is sent to a Mobility Management Entity, MME; parameters necessary for paging the wireless terminal are received from the MME, at least a partial UE context is kept for the wireless terminal, i.e. the MME transfers to the RAN a paging context, called UE partial context; a key to the kept UE partial context is allocated and sent to the MME. The MME, which is part of a core network, is thus made aware of the state change of the terminal. When the terminal is in idle state, the S-GW forwards downlink packets to an eNB, as in connected mode. The eNB buffers the downlink packets and looks up the partial context corresponding to the given S I-U bearer, wherein the eNB locally pages the terminal in its cells using the paging parameters that it stores in the partial context. Hence the UE partial context is provided by the MME and serves the eNB to page the UE. Paging failure may be detected by timer supervision of the eNB. The paging failure is indicated to the MME in a message, which requests the MME to perform regular paging in all the TAs of the terminal's TAI list. Subsequently, the MME sends paging message to relevant eNBs,

### Summary of the invention

According to one embodiment there is provided a method in a mobile communications network, wherein the mobile communications network includes a user equipment UE, an access node of an access network, and a control plane function, the method comprising the following steps: moving the UE from a connected state into a connected inactive state in the access network while maintaining an active control plane connection associated with the UE between the access node and the control plane function; generating at the access node a UE context; receiving at the access node from a core network downlink data destined to the UE; if failing to resume an access network connection between the access node and the UE, generating by the access node a downlink data notification based on the UE context; sending the downlink data notification through the active control plane connection.

This method provides the advantage that the CN need not be aware of an inactivity state of the UE so that data destined to the UE are directly forwarded from the CN user plane to the Radio Access Network (RAN), even if the UE is in an inactivity state. Furthermore, sending a downlink data notification from the AN to the CN can occur through an active control plane connection, so that the overhead of establishing a connection can be avoided. The step of resuming an access network connection may further not necessarily involve paging and detecting failure of paging, which is a more elaborate procedure that an RRC resume connection attempt.

According to one embodiment, moving the UE from a connected state into a connected inactive state in the access network is triggered by the access network.

According to one embodiment, the UE context associates a user plane identifier of the UE with the active control plane connection associated with the UE.

This has the advantage that the UE context can specify the CP-F, which may, e.g., be an MME, to which the downlink data notification is sent.

According to one embodiment, the method further comprises the steps of receiving the downlink data notification by a control plane function; paging the UE by the control plane function; wherein the control plane function is preferably implemented by a mobility management entity MME of the core network.

This has the advantage that paging the UE may be performed initially only in the access node that reported the downlink data notification, since the UE is still in connected mode from the perspective of the CN, specifically the MME.

According to one embodiment, paging the UE comprises paging the UE under the access node; and /or paging the UE under other access nodes in the tracking areas list of the UE.

This has the advantage that paging can be done stepwise such that if local paging fails, paging is expanded to cells in the tracking areas list of the UE. Such approach to paging can increase the efficiency of the paging procedure.

According to one embodiment, the method further comprises the step of, after successful paging of the UE through a new access node, performing a service request procedure between the UE and the control plane function.

This has the advantage and effect that the UE is transited to connected mode and receptive for downlink data.

According to one embodiment, the new access node is either the access node or one of the other access nodes further comprising one or more of the following steps: signalling a stop paging message from the new access node to the control plane function; forwarding the downlink data destined to the UE from the access node to the new access node; transmitting by the new access node the downlink data destined to the UE.

This has the advantage that paging activity can be stopped timely so that the overall paging overhead may be reduced. Furthermore, downlink data sent to a previous access node to which the UE was connected previously will not be lost and can reach the UE through the forwarding, which means that the overall reliability of downlink data transmission can be increase.

According to one embodiment there is provided an access node of an access network of a mobile communications network, wherein the mobile communications network includes a user equipment UE, the access node being adapted to: move the UE from a connected state into a connected inactive state in the access network while maintaining an active control plane connection associated with the UE; generating a UE context; receiving downlink data destined to the UE; if failing to resume a connection of the UE in the access network, generating a downlink data notification based on the UE context; sending the downlink data notification through the active control plane connection.

According to one embodiment the access node according to the previous embodiment comprises one or more modules for performing the method according to the methods described as embodiments above.

The embodiments which concern an access node enable an implementation of an apparatus, having the same advantages as the methods according to the embodiments described above.

According to one embodiment there is provided a computer program, which when being executed on a computer, enables said computer to carry out the steps of the methods according to the embodiments described above.

### Description of the drawings

Figure 1 shows an interaction scenario with elements of a mobile communication network according to the Evolve Universal Terrestrial Radio Access Network (E-UTRAN) specifications where a UE in connected mode receives downlink data.
Figure 2 shows an interaction scenario corresponding to Figure 1, where the UE is in idle mode and where paging occurs according to the EPC. The scenario is referred to as Network triggered Service Request in EPC.
Figure 3 shows an interaction scenario based on the current Local IP access specifications according to 3GPP TS 23.859 V12.0.1. This scenario is referred to as Network triggered Service Request in LIPA.
Figure 4 shows an architectural diagram based on a user plane optimization, wherein a UE is in RRC inactive connected mode, according to 3GPP TS 24.301 and 3GPP TSG-RAN WG2.
Figure 5 shows an architectural diagram of a target configuration with elements in the access network and the core network and their interactions relations, wherein an AN receives data destined to a given U-plane identifier such as an IP address.
Figure 6 shows an architectural diagram based on the configuration of Figure 5 with a downlink data notification from the access network to the core network.
Figure 7 shows an architectural diagram according to Figure 6, wherein the AN node keeps a UE context to associate a user plane identifier to a control plane connection associated to the UE.
Figure 8 shows the scenario of Figure 7 with reference to the Evolved Packet System Architecture.
Figure 9 shows the scenario of Figure 7 with reference to a simplified care network, referred to as SimpleCore.
Figure 10 shows an interaction diagram according based on the target configuration where downlink data reaches the AN node while the UE is in inactive connected mode.
Figure 11 shows the scenario of Figure 10 with reference to the Evolved Packet System Architecture.
Figure 12 shows an interaction diagram with the signaling between the involved elements in the access network and the core network.

### Detailed description

At first, some terms used in the description will be defined in the following list of abbreviations.
- AN: Access Network
- AS: Application Server
- CP-F: Control Plane Function (e.g. MME)
- CN: Core Network
- DRX: Discontinuous Reception
- eNB: also eNodeB or evolved NodeB (base station)
- E-UTRAN: Evolved Universal Terrestrial Radio Access Network
- EPC: Evolved Packet Core
- EPS: Evolved Packet System
- GTP-U: GRPS Tunneling Protocol - User Plane
- GW: gateway
- IMSI: International Mobile Subscriber Identity
- IP: Internet Protocol
- MME: Mobility Management Entity
- P-GW: Packet Data Network Gateway
- RRC: Radio Resource Control
- S-GW: Serving Gateway
- S-TMSI: SAE-Temporary Mobile Subscriber Identity
- TA: Tracking Area
- TAI: Tracking Area Identity
- TAU: Tracking Area Update
- UE: User Equipment
- UP Fn: User Plane Function (e.g. S-GW)

The disclosure is concerned with technology for 5G communication networks, paging in general, and more specifically RAN-based paging.

Recent studies in 3GPP standardization introduce RAN-based paging as an option for next generation networks. The 3GPP Study on Architecture for Next Generation System (TR 23.799 V0.5.0) proposes a Radio Resource Control (RRC) inactive connected state for the User Equipment (UE) where the UE is in connected mode from the Core Network (CN) point of view but it has no active RRC connection in the RAN. This means, that a UE is moved from a connected state to a connected inactive state, states respectively referring to RRC states in the AN, while maintaining an active control plane connection associated with the UE. The CN is not aware of the inactivity state of the UE, so that data destined to the UE are directly forwarded from the CN user plane to the Radio Access Network (RAN). The term Access Network (AN) refers to access networks in general, which can be fixed or mobile, wherein a Radio Access Network (RAN) is a mobile access network.

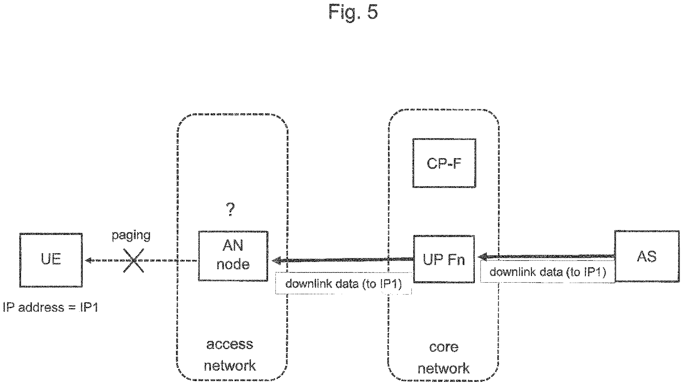

A target configuration for such a scenario is illustrated in Figure 5. The illustrated target configuration reflects, for example, elements and relationship of elements in the Next Generation Mobile Networks (NGMN), sometimes referred to as 5G, but not limited thereto. In the Figure, an AN node, also referred to as access node, receives data destined to a given U-Plane identifier, which is for example an IP address IP1. If the U-plane connection between the AN node and the UE is not active, e.g. the UE is in an inactive connected state at time when data is received by the access network, then the access network cannot forward the data to the UE. When applying known EPC reachability procedures to this configuration and scenario, then the UE still remains unreachable, since paging is only triggered by the core network if the UE is, from the viewpoint of the core network, in an idle mode state. Figure 5 illustrates this aspect and shows that the AN node, despite receiving data, cannot forward this data to the UE, since paging is not triggered.

In the above mentioned 3GPP Study on Architecture for Next Generation System (TR 23.799 V0.5.0), which proposes the inactive connected state of the UE, it is also proposed that the establishment of the connection between the RAN node and the UE is managed by the RAN. This possibly involves a reachability procedure to resume the UE from the RRC inactive connected state to the RRC connected state. For example, the RAN originates paging to move the UE from the RRC inactive connected state to RRC connected state. Such state change does however only succeed, if the UE is still reachable by the RAN node.

This disclosure addresses the case of a failure of this procedure in the above outlined target configuration and scenario, so that after receiving data destined to a UE the RAN cannot re-establish the connection to the UE, for example because the UE has moved outside the area reachable by the RAN node, and hence cannot deliver the received data. Other reasons for failure to re-establish a connection to the UE are also feasible, specifically, the re-establishment of the connection can be something different from a paging, so that re-establishment may fail for other reasons than the UE not being camped anymore on the cell.

Note that this scenario and problem can be generalized to a converged core network supporting multiple fixed and mobile access networks: how to handle a failure of the data transfer from an Access Network (AN) node to a UE due to unreachability of the UE under that AN node, in a scenario where the UE is connected state from the core network point of view?

In one example the AN node receives from the core network data destined to a user plane identifier associated with an end device such as a UE, e.g. the IP address or any layer 2 or layer 3 identifier used in the user plane to identify the end device. In a second example the AN node terminates a user plane tunnel with the core network, the user plane tunnel being associated with a specific UE, such as a GTP-U tunnel in current EPC. In both examples it is necessary to handle the case that the end device is neither connected with nor reachable (to establish a connection) from the AN node.

Thus, one aspect addressed in this disclosure is how, after receiving data destined to an end device, an access network node handles a case of unreachability of the device.

In one aspect, embodiments implement a new approach to generate a notification from an access network node to a control plane function when the AN node receives downlink data destined to a user equipment when the access network node moved the UE to an inactive state and cannot resume the connection to the UE. The proposed procedure involves an access network node, a control function and a user equipment. The control function considers the user equipment in connected state, so that data destined to the user equipment are directly forwarded to the access network node that provides connectivity to the user equipment. For the access network node the user equipment is in inactive state, so that the connection to the user equipment must be re-activated to forward data.

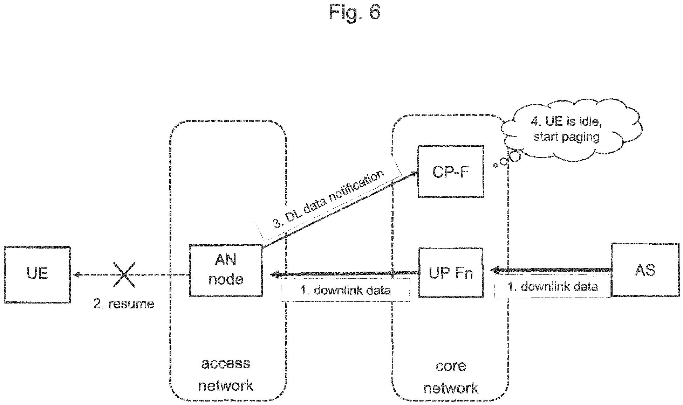

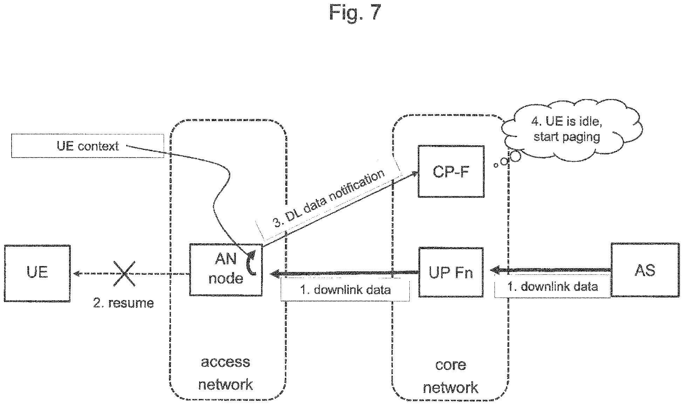

The architecture and the interaction between the UE, AS, elements in the access network, and elements in the core network is illustrated in Figure 6. The interaction comprises the following steps:
- As a first step, the access network node receives data to be forwarded to the user equipment (step 1). In one example of step 1, the AN node receives DL data destined to a given user plane identifier that AN node cannot resolve to any active connection in the access network.
- Then, the access network node determines that the user plane connection cannot be re-activated or resumed (step 2). In one example of step 2, the AN node fails to resume the connection to the UE. Determining by the AN that a connection to the UE cannot be re-activated or resumed does not necessarily involve paging.
- Subsequently, the access network node generates a notification to a control function (step 3) to start a procedure to determine the location of the user equipment and establish a user plane connection. This notification is referred to as downlink (DL) data notification herein. In one example of step 3, the AN node generates a DL data notification to a CN C-plane function. In order to notify the control function, the access network node needs to keep a mapping context between a user plane identifier related to the user equipment (UE) and an active control plane connection related to the same user equipment. Said mapping context is also referred to UE context herein and is generated at the access node. Specifically, the generation of said context involves only the access node and not the CP-F or other elements of the core network, so that the core network can remain unaware of the inactivity of the terminal. As mentioned already, while the UE is in an inactive state with respect to the AN, the control plane connection between the UE and the core network remains active. In order to execute step 3, the AN node needs to keep a UE context to associate the user plane identifier to the active control plane connection, as illustrated in Figure 7. Said DL data notification is sent by the access node to the CP-F through said active control plane connection. The signaling is thus very efficient, since the DL data notification can be directed directly to the responsible CP-F over an established connection to the core network. Specifically, a connection setup, broadcast, or multicast are avoided.
- Finally, in step 4, the CP-F receives the downlink data notification, moves the UE to idle mode and initiates paging to determine the location of the UE; thus the UE is paged by the CP-F; paging the UE comprises paging the UE under the access node; and /or paging the UE under other access nodes in the tracking areas list of the UE; furthermore, the CP-F is preferably implemented by a mobility management entity MME of the core network.

This aspect described with reference to Figures 6 and 7 have for example the following advantages: An AN node is enabled, by means of the DL data notification, to handle the scenario that it receives data for a UE that is inactive and where the AN cannot be re-activate the destination UE or resume the AN connection to the destination UE by itself. Furthermore, said aspect also allows to decouple the AN, specifically a RAN, from the core network, since the core network does not need to know details about the UE IDLE state in relation to the RAN. Finally, the UE can eventually be reachable in case of arriving downlink data, in case the UE is in RRC connected inactive state and has moved to another eNB.

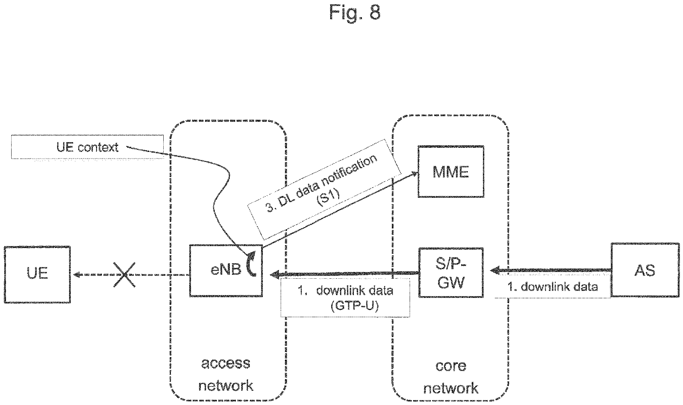

Figure 8 shows elements and their interactions described above on Figure 6 and 7, with respect to the Evolved Packet System (EPS) architecture. In this example, in step 1, downlink data destined to the UE is received by an eNB through a GTP-U tunnel. A connection between the destined UE and the eNB is not available. Then, in step 3, a DL data notification directed to a MME is sent on the S1 connection associated with the UE; specifically, when the UE is in an RRC inactive connected state, the S1 connection for the UE is still alive. Figure 8 also shows a UE context maintained by the eNB, which is used to associate the GTP-U tunnel identifier (TEID) with the S1 connection of the UE.

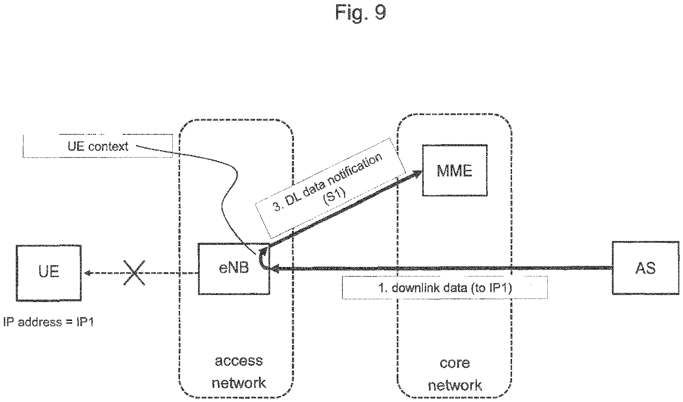

Figure 9 shows elements and their interactions described above on Figure 6 and 7, with respect to the SimpleCore architecture, wherein SimpleCore is a variant of the EPS architecture with the goal to simplify or even eliminate certain elements in the core network. SimpleCore is described, for example, in W. Kiess, Yuan Xun Gu, S. Thakolsri, M. R. Sama and S. Beker, "SimpleCore: A connectionless, best effort, no-mobility-supporting 5G core architecture," 2016 IEEE International Conference on Communications Workshops (ICC), Kuala Lumpur, 2016. In this embodiment, downlink data destined to an IP address IP1 associated with a UE is received by an eNB. A connection between the destined UE and the eNB is not available. Then, in step 3, a DL data notification directed to a MME is sent on the S1 connection associated with the UE; specifically, when the UE is in an RRC inactive connected state, the S1 connection for the UE is still alive. Figure 9 also shows a UE context maintained by the eNB, which is used to associate the IP address with the S1 connection of the UE.

### Signaling procedure

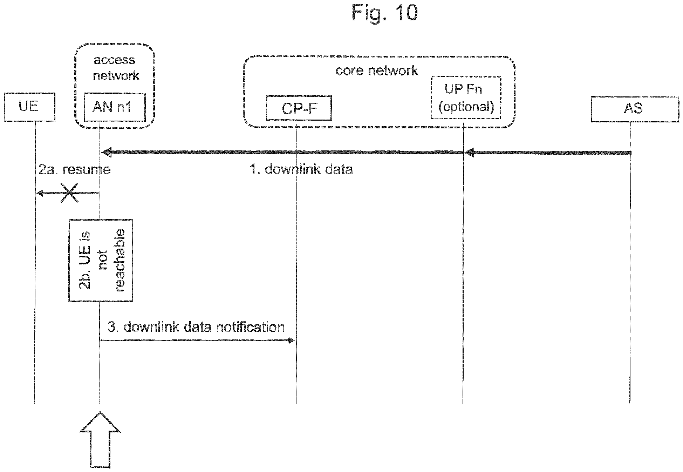

An overview of the signaling procedure in the above described embodiments is shown in Figure 10 with respect to the target configuration. In step 1, data is received from an application server AS by the core network and forwarded to the AN node based on the last known AN node that the destination UE has been associated with. In step 2a, connection resume fails so that in step 2b it is determined that UE is unreachable from the perspective of AN node n1. Subsequently, in step 3, the node n1 sends a DL data notification message to a CP-F of the core network. The large arrow at the bottom of Figure 10 indicates the stage at which downlink data is buffered, which is the node n1 in the AN.

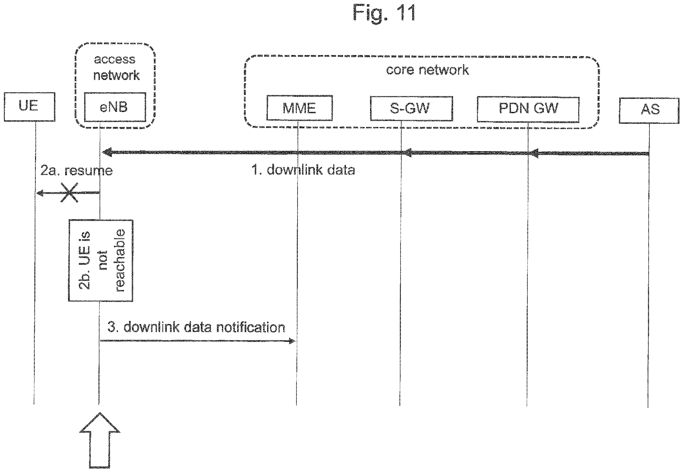

Figure 11 shows the signaling interactions of Figure 10 with reference to the EPC. In the example, the EPC and related elements are adapted to be able to forward downlink data to the AN before determining the location of the UE. In the scenario, application server AS send data to the core network, specifically a Packet Data Network Gateway (PDN-GW) and an S-GW. Based on the tunneling configuration between the S-GW and the eNB, data is forwarded from the S-GW to the eNB (step 1). At step 2a, the eNB determines that there is no AN connection to the UE and further at step 2b that the UE is not reachable. Finally, at step 3, a DL data notification may be sent be the eNB to the MME. The large arrow at the bottom of Figure 11 indicates the stage at which downlink data is buffered, which is the eNB in the AN.

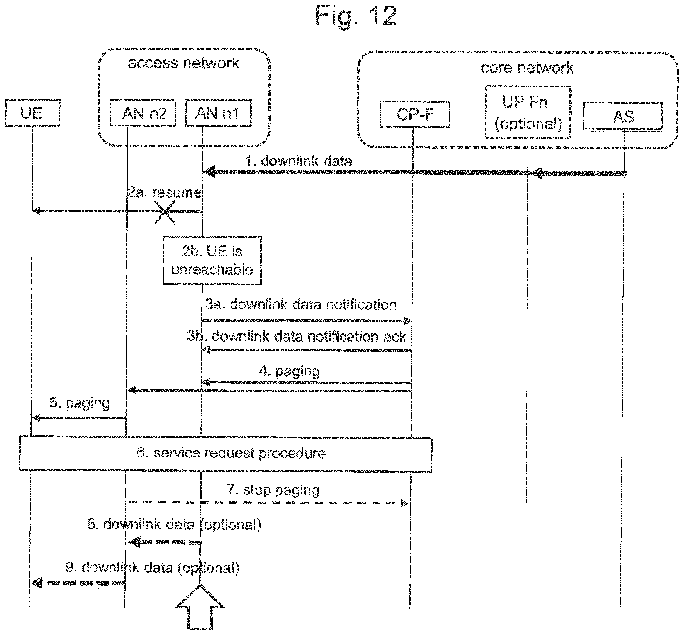

The detailed signaling procedure is described in Fig. 12 for the case that the CP-F is located in the core network. In this case, it is assumed that an Application Server (AS) wants to transmit data to a UE, and the downlink data traverses a Core Network (CN) and an Access Network (AN). The UE, previously connected to AN node 1, is considered to be in connected mode by the CP-F and in connected inactive mode in the AN (not visualized in detail in the figure). The AN node 1 keeps an active control plane connection with the CP-F associated to the UE.

Moreover, the AN node 1 holds a UE context that associates this active control plane connection and a user plane identifier used in the CN user plane to forward data to the UE.

Figure 12 shows elements of the core network, of the access network, a UE and an AS. The core network includes a CF-P. In one embodiment the CP-F can be an MME and the AN node 1 an eNB or a set of eNBs. The procedure described in Figure 12 includes the following steps:
1) The AS sends data to a UE; the CN forwards the data to the AN node 1; the AN node 1 receives data destined to the user plane identifier associated to the UE; optionally AN node 1 buffers the received data.
2)
   a) The AN node 1 fails to resolve the user plane identifier to an active connection to the UE; the AN node 1 cannot resume the connection to the UE;
   b) The UE is detected to be unreachable; wherein the AN node 1 might consider the UE as unreachable because it cannot resume the connection to the UE within a certain time and/or after a certain number of re-tries
3)
   a) Using the above described UE context, the AN generates a notification to the CP-F;
   b) The CP-F resolves the identity of the unreachable UE and acknowledges the reception of the notification;
4) The CP-F triggers a reachability procedure, e.g. a paging, to determine where the UE can currently be reached;
5) The reachability procedure, e.g. a paging, executed by AN node 2 reaches the UE;
6) The UE performs a Service Request Procedure; performing the procedure may be dependent on the result, specifically the success or failure, of the preceding reachability procedure. Furthermore, step 6 is optional and serves in the embodiment shown in Figure 12 only for illustrative purposes. In a configuration corresponding or similar to current communication networks based on the EPS, the service request procedure may be carried out according to the embodiment shown in Figure 12. However the illustration is not meant to limit the applicability of the principles underlying the described method and step 6 to other scenarios, where step 6 may not be performed or be performed differently.
7) Optionally, the AN node 2 sends a stop paging message to the CP-F to stop the reachability procedure initiated in step 4;
8) Optionally the AN node 1 forwards the data to AN node 2, which requires that AN node 1 buffered the received data in step 1;
9) Optionally the AN node 2 forwards the data to the UE.

The present invention has been described by adopting terminology and concepts from the LTE design. It should be clear to skilled person that the present invention can be applied to other communication networks in particular Next Generation Mobile Networks (NGMN), sometimes referred to as 5G.

The skilled person will readily recognize that embodiments of the invention may be implemented by software or hardware or by a combination of both. As far as an apparatus or a module according to embodiments of the invention is concerned, the skilled person will recognize that they can be implemented by a microprocessor controlled by a suitably programmed computer program, which may be stored on a non-transitory computer-readable medium.

## Claims

1. A method in a mobile communications network,
wherein the mobile communications network includes a user equipment UE, an access node of an access network, and a control plane function,
the method comprising the following steps:
moving the UE from a connected state into a connected inactive state in the access network while maintaining an active control plane connection associated with the UE between the access node and the control plane function;
generating at the access node a UE context;
receiving at the access node from a core network downlink data destined to the UE;
if failing to resume an access network connection between the access node and the UE, generating by the access node a downlink data notification based on the UE context;
sending the downlink data notification through the active control plane connection.

2. The method of claim 1, wherein moving the UE from a connected state into a connected inactive state in the access network is triggered by the access network.

3. The method of claim 1 or 2, wherein the UE context associates a user plane identifier of the UE with the active control plane connection associated with the UE.

4. The method of one of claims 1 to 3, further comprising the steps of
receiving the downlink data notification by the control plane function;
paging the UE by the control plane function;
wherein the control plane function is preferably implemented by a mobility management entity MME of the core network.

5. The method of claim 4, wherein paging the UE comprises
paging the UE under the access node; and /or
paging the UE under other access nodes in the tracking areas list of the UE.

6. The method of claim 4 or 5, further comprising the step of
after successful paging of the UE through a new access node, performing a service request procedure between the UE and the control plane function.

7. The method of claim 6, wherein the new access node is either the access node or one of the other access nodes further comprising one or more of the following steps:
signalling a stop paging message from the new access node to the control plane function;
forwarding the downlink data destined to the UE from the access node to the new access node;
transmitting by the new access node the downlink data destined to the UE.

8. An access node of an access network of a mobile communications network,
wherein the mobile communications network includes a user equipment UE and a control plane function,
the access node being adapted to:
move the UE from a connected state into a connected inactive state in the access network while maintaining an active control plane connection associated with the UE between the access node and the control plane function;
generating a UE context;
receiving downlink data destined to the UE;
if failing to resume a connection of the UE in the access network, generating a downlink data notification based on the UE context;
sending the downlink data notification through the active control plane connection.

9. The access node of claim 8, further comprising:
one or more modules for performing the method according to one of claims 2 to 7.

10. A computer program, which when being executed on a computer, enables said computer to carry out steps of the method according to one of claims 1 to 7.
